# EUROPÄISCHE PATENTSCHRIFT

(11) **EP 0 698 461 B1**
(45) Veröffentlichungstag und Bekanntmachung des Hinweises auf die Patenterteilung: **03.12.1997**
(21) Anmeldenummer: 95112651.5
(22) Anmeldetag: 11.08.1995
(51) Int. Cl.: B29B 9/06

(54) **Verfahren zur Granulierung von Polymeren und Vorrichtung dazu**
Process for granulating polymers and apparatus therefor
Procédé de granulation des polymères et dispositif pour sa mise en oeuvre

(30) Priorität: 23.08.1994 AT 1627/94; 18.11.1994 AT 2136/94
(43) Veröffentlichungstag der Anmeldung: 28.02.1996
(73) Patentinhaber: PCD-Polymere Gesellschaft m.b.H., A-2323 Schwechat-Mannswörth (AT)
(72) Erfinder: Schier, Helge, Dipl.-Ing., A-2320 Schwechat (AT)
(74) Vertreter: Kunz, Ekkehard, Dr.

(56) Entgegenhaltungen:
- DE-C- 3 815 897
- DE-C- 3 842 072
- DE-C- 4 419 786
- US-A- 2 653 350
- US-A- 3 590 678
- US-A- 4 138 208
- PATENT ABSTRACTS OF JAPAN vol. 3, no. 95 (C-55), 11.August 1979 & JP-A-54 073850 (KOBE SEIKOSHO K.K.), 13.Juni 1979,
- DATABASE WPI Section Ch, Week 8709 11.März 1987 Derwent Publications Ltd., London, GB; Class A, AN 87-063303 XP002011004 & SU-A-1 242 386 (YAROSLAV POLY.) , 7.Juli 1986
- DATABASE WPI Section Ch, Week 8713 8.April 1987 Derwent Publications Ltd., London, GB; Class A, AN 87-092329 XP002011005 & SU-A-1 248 826 (RUBBER TECH. EQUIP. INST.) , 7.August 1986

## Beschreibung

Im Kunststoffherstellungsprozeß bildet normalerweise ein Granuliervorgang den Abschluß der Aufbereitungsphase, bei dem die Kunststoffschmelze in einer geeigneten Granuliervorrichtung in einen gut lager-, transport- und verarbeitungsfähigen Zustand, nämlich in Granulatform überführt wird. Dabei werden je nach gewünschtem Durchsatz unterschiedliche Granulierungsmethoden angewandt.
Für hohe Durchsätze eignet sich die Unterwasser-Granulierung bisher am besten.
Dabei wird, wie beispielsweise aus DE 38 15 897 C1 bekannt, die zu granulierende Polymerschmelze über ein mit einem im Gehäuse lagerveränderbaren Küken ausgestaltes Anfahrventil und gegebenenfalls über einen Siebwechsler zur Lochplatte gedrückt und das durch die der Lochplatte nachfolgenden Schneidvorrichtung erzeugte Granulat mittels eines Kühlwasserstromes einer Trockenvorrichtung zugeführt, wobei ein exakter Schnitt an der Lochplatte maßgeblich für die Qualität des Granulates ist. Voraussetzung für einen exakten Schnitt ist eine möglichst plane Schnittfläche der Lochplatte.
Bei den bisher eingesetzten Granuliervorrichtungen treten jedoch Probleme auf, da sich die für hohe Durchsätze von mehreren Tonnen/Stunde nötigen großen Lochplatten mit einem Durchmesser von mehr als 450 mm durch die an den Außenflächen der Lochplatten herrschenden Temperaturunterschiede ständig verformen. Das Ausmaß der Verformung hängt dabei von der Steifheit und dem Durchmesser der Lochplatte, sowie vom herrschenden Temperaturunterschied und dem von der Polymerschmelze ausgeübten Druck ab. Je größer die Lochplatten sind, desto größer ist die Deformation, wodurch ein exakter Schnitt bei der Granulierung nicht mehr möglich ist. Besonders nachteilig wirkt sich die Verformbarkeit der Lochplatten beim Schneiden bzw. Granulieren von Polymeren mit einem hohen Schmelzindex, insbesondere bei Polypropylen mit einem Schmelzindex von größer 50 (g/10 min, 230°C, Last 2,16 kg), aus. Der Erfindung lag daher die Aufgabe zugrunde, die Schnittqualität der Granulate, insbesondere bei der Granulierung von Polymerschmelzen mit hohem Schmelzindex, entscheidend zu verbessern.

Unerwarteterweise konnte nun ein Verfahren und eine Vorrichtung gefunden werden, wodurch Polymere, insbesondere Polymere mit hohem Schmelzindex, wie etwa Polypropylen mit einem Schmelzindex größer 50 (g/10 min, 230°C, Last 2,16 kg), problemlos granuliert werden können, wobei die Nachteile der bisher verwendeten Lochplatten vermieden werden und ein hoher Durchsatz an Polymerschmelze ermöglicht wird.

Gegenstand der vorliegenden Erfindung ist demnach ein Verfahren zur Granulierung einer Polymerschmelze, wobei die zu granulierende Polymerschmelze im Gehäuse einer Granuliervorrichtung in zumindest zwei Teilströme geteilt wird, die jeweils umgelenkt und zumindest zwei räumlich voneinander getrennten und beheizbaren Lochplatten zugeführt werden, worauf die Teilströme durch die den Lochplatten zugeordneten Schneidevorrichtungen in Granulatform überführt und mittels eines Kühlmediums nachbehandelt werden.

Ein weiterer Gegenstand der vorliegenden Erfindung ist eine Vorrichtung zur Durchführung des erfindungsgemäßen Verfahrens, wobei in einem mit dem austrittseitigen Ende einer Auspreßvorrichtung verbundenen Gehäuse (4) einer Granuliervorrichtung ein Anfahrventil (13) angeordnet ist und das Anfahrventil (13) mit einem im Gehäuse (4) lageveränderbaren Küken (1) ausgestaltet ist, wobei das Küken (1) in Betriebsposition eine mit der Auspreßeinrichtung (11) verbundene Einlaßöffnung (18) und seitlich hierzu mindestens zwei damit verbundene Ausläße (5) aufweist, woran im Gehäuse jeweils totraumarme Verteilerräume (2) anschließen, die das Küken (1) mit zumindest zwei beheizbaren und räumlich voneinander getrennten Lochplatten (3) verbinden.

Ein Ausführungsbeispiel der Erfindung ist in Figur 1 bis 5 näher dargestellt und nachfolgend beschrieben.
In Fig. 1 ist eine mögliche Ausführungsform der erfindungsgemäßen Vorrichtung in Seitenansicht dargestellt.
In Fig. 2 wird die Vorrichtung nach Fig. 1 in einer Aufsicht gezeigt, die Eintritts-und die Austrittsöffnungen für das Kühlmedium 12A und 12A' sind dargestellt.
Fig. 3 stellt das Anfahrventil mit Küken (1) und Lochplatten (3,3') in Betriebsposition längs der Schnittlinie AA nach Fig. 1 dar.
Fig. 4 zeigt in Einzelheit das Küken längs der Schnittlinie BB nach Fig. 1 mit den Eingangsöffnungen für Betriebsstellung (18) und Anfahrposition (19).
Fig. 5 ist ein Querschnitt des Kükens längs der Schnittlinie CC nach Fig. 4 in Anfahrposition, bei der die Schmelze um 90° nach unten gelenkt wird.

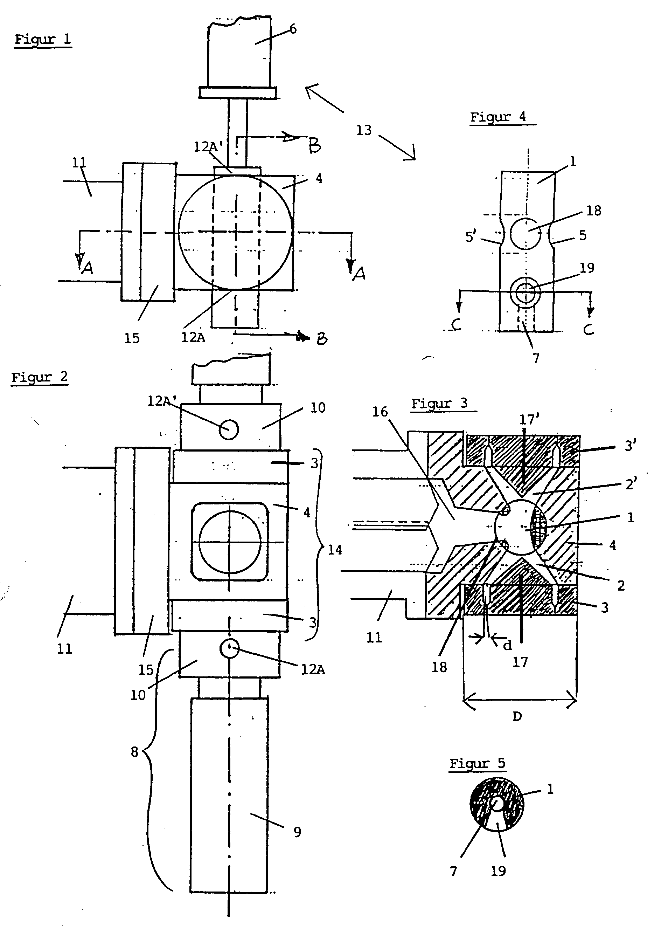

Wie das Ausführungsbeispiel zeigt wird eine durch einen vorgeschalteten Extruder 11 aufbereitete Polymerschmelze in zwei Teilströme geteilt. Die Aufteilung erfolgt in einem Küken 1 einer Granuliervorrichtung 14, in der Anfahrventil 13 und Granuliergehäuse 4 aus einem Stück sind und somit eine Einheit bilden. Wie in Fig. 1 und 2 dargestellt, ist die Granuliervorrichtung 14 mit einer Auspreßeinrichtung, etwa einem Extruder 11 mittels eines Flansches 15 fest verbunden.
Die Austrittsöffnung des Extruders 11 ist durch eine im Gehäuse 4 angeordnete Bohrung 16 mit dem Küken 1 verbunden. Dieses Küken 1 ist im Gehäuse 4 verschiebbar und wird durch eine Kolben/Zylindereinheit 6 bewegt. Das Küken 1 weist für den Anfahrbetrieb einen Einlaß 19 und einen Nebenauslaß 7 auf, aus dem in entsprechender Position die Polymerschmelze aus dem Gehäuse 4 geleitet wird. In der Betriebsposition gelangt die zu granulierende Polymerschmelze durch die Austrittsöffnung des Extruders durch die Einlaßöffnung 18, in das Küken 1, worauf die Aufteilung des Schmelzstromes im Küken 1 erfolgt, und die Teilströme durch die seitlich angeordneten Auslässe 5 und 5' in die Verteilerräume 2 und 2' gelangen. Die Auslässe 5 und 5' an den Seiten des Kükens 1 sind dabei so positioniert, daß sowohl eine Aufteilung des Polymerstromes als auch eine Umlenkung der Teilströme erfolgt. Bevorzugt werden die Teilströme um jeweils 45 bis 120° umgelenkt. Besonders bevorzugt ist eine Umlenkung um jeweils 90°, wie in Figur 3 dargestellt ist. Die Auslässe 5 und 5' sind dabei zwei einfache gleich dimensionierte Bohrungen. Die Verteilerräume 2 bzw. 2' verbinden das Küken 1 mit zwei identen Lochplatten 3 bzw. 3', an denen zwecks gleichmäßiger Verteilung der Schmelze kegelige Verdrängungskörper 17 bzw. 17' angeordnet sind. Die Verteilerräume sind dabei so dimensioniert, daß sie möglichst kurze Schmelzflußwege gewährleisten. Entsprechend der Bauart der Granuliervorrichtung kann die erfindungsgemäße Vorrichtung anstatt mit einem Küken 1 auch mit einem fix eingebauten Bauteil entsprechender Geometrie ausgerüstet sein. Der Lochplattendurchmesser D (Fig. 3), die Lochzahl und der Lochdurchmesser d hängen vom gewünschten Durchsatz bzw. von der Leistung des verwendeten vorgeschalteten Extruders 11, sowie von der gewünschten Granulatgröße und den zu granulierenden Polymeren ab.

Der Durchmesser der Lochplatten 3 bzw. 3' kann somit variieren und dem jeweiligen Verwendungszweck angepaßt werden. So eignen sich beispielsweise für die Granulierung von Polymeren mit einem Schmelzindex von über 50 (g/10 min, 230°C, Last 2,16 kg) Lochplatten mit einem Durchmesser bis zu 450 mm, bevorzugt bis zu 360 mm.
Werden Polymere mit einem geringeren Schmelzindex granuliert, können jedoch auch Lochplatten mit größerem Durchmesser zum Einsatz kommen.

Je nach gewünschtem Durchsatz bzw. in Abhängigkeit vom Lochplattendurchmesser kann daher auch die Lochzahl variieren und den jeweiligen Gegebenheiten angepaßt werden. Bevorzugt ist eine Lochzahl von 50 - 500, die Lochzahl kann jedoch, wie bereits erwähnt, je nach den gegebenen Anforderungen sowohl erhöht als auch erniedrigt werden. Der Lochdurchmesser d (Fig. 3) beträgt dabei bevorzugt 1 bis 5 mm.

Die Beheizung der Lochplatten kann beispielsweise mittels Dampf, Heißöl oder Strom erfolgen. Es ist dabei vorteilhaft, identische Verhältnisse an den beiden Lochplatten 3 bzw. 3' in bezug auf die Durchgangsmenge und somit identisches Granulat zu erzielen. Dies kann beispielsweise dadurch erreicht werden, indem die Lochplatten 3 bzw. 3' über getrennte Heizkreise beheizt werden und über die durch geeignete Temperaturkontrollen ermittelte Lochplattentemperatur die Durchgangsmenge geregelt wird. Als Kühlmedium eignen sich beispielsweise Wasser, Stickstoff oder Luft. Bevorzugt wird Wasser als Kühlmedium verwendet. Um beispielsweise bei einer Unterwassergranulierung die jeweilige Wassermenge genauer kontrollieren zu können und auch Fahrweisen mit unterschiedlichen Kühlwassertemperaturen zu ermöglichen, können bei dem erfindungsgemäßen Verfahren getrennte Kühlwasserkreisläufe bzw. -zuläufe engesetzt werden.

Den Lochplatten 3 bzw. 3' ist jeweils eine Schneidvorrichtung 8 bestehend aus Antriebseinheit 9 und Schneidmesserkopf 10 zugeordnet.

Der Schmelzfluß erfolgt in der erfindungsgemäßen Vorichtung nach dem erfindungsgemäßen Verfahren ausgehend von der Außpreßvorrichtung, dem Extruder 11, über die Bohrung 16 durch die Eintrittsöffnung 18 in das Küken 1. Die Schmelze tritt sodann aus den Bohrungen bzw. den Auslässen 5 bzw. 5' in die Verteilerräume 2 bzw. 2' über. Von hier gelang die Schmelze direkt zu den Lochplatten 3 bzw. 3' und wird beim Austritt zu Granulatkörnern geschnitten.
Es ist jedoch auch möglich die Schmelze in mehr als zwei Teilströme aufzuteilen und der gleichen Zahl an Lochplatten wie Teilströme vorhanden sind zuzuführen.
Die Obergrenze der möglichen Teilströme wird dabei durch maschinenbauliche Faktoren begrenzt.

Das erfindungsgemäße Verfahren bzw. die erfindungsgemäße Vorrichtung eignen sich insbesondere zur Granulierung thermoplastischer Kunststoffe, z. B. von Polypropylen mit einem Schmelzindex von 50 bis 500.

Durch das erfindungsgemäße Verfahren und die erfindungsgemäße Vorrichtung wird es ermöglicht, hohe Durchsätze ohne die bei bisher für hohe Durchsätze bekannten Granuliertechniken auftretenden Nachteile zu erzielen. Nach Maßgabe der Erfindung werden somit in vorteilhafter Weise den komplexen Anforderungen während des Granuliervorganges entsprochen. So ist insbesondere erreicht, daß große Produktmengen mittels kleiner Bauteile granuliert werden können.
Werden beispielsweise Polymere mit einem Schmelzindex größer 50 granuliert, so kann der Durchsatz bis zu 6 t/h betragen, bei der Granulierung von Polymeren mit geringerem Schmelzindex sind jedoch auch höhere Durchsätze beispielsweise von bis zu 20 t/h aber auch mehr möglich.

## Patentansprüche

1. Verfahren zur Granulierung einer Polymerschmelze, wobei die zu granulierende Polymerschmelze im Gehäuse einer Granuliervorrichtung in zumindest zwei Teilströme geteilt wird, die jeweils umgelenkt und zumindest zwei räumlich voneinander getrennten und beheizbaren Lochplatten zugeführt werden, worauf die beiden Teilströme durch die den Lochplatten zugeordneten Schneidevorrichtungen in Granulatform überführt und mittels eines Kühlmediums nachbehandelt werden.

2. Verfahren nach Anspruch 1, dadurch gekennzeichnet, daß die Aufteilung der Polymerschmelze in einem fix in einer Granuliervorrichtung eingebauten Bauteil entsprechender Geometrie erfolgt.

3. Verfahren nach Anspruch 1, dadurch gekennzeichnet, daß die Aufteilung der Polymerschmelze in einem Küken eines Anfahrventiles erfolgt.

4. Verfahren nach Anspruch 1, dadurch gekennzeichnet, daß die Teilströme um jeweils 45 bis 120° umgelenkt werden.

5. Verfahren nach Anspruch 1, dadurch gekennzeichnet, daß die Polymerschmelze in zwei Teilströme geteilt wird, die zwei räumlich getrennten und beheizbaren Lochplatten zugeführt werden.

6. Verfahren nach Anspruch 1, dadurch gekennzeichnet, daß als Polymer Polypropylen eingesetzt wird.

7. Vorrichtung zur Granulierung von Polymerschmelzen, wobei in einem mit dem austrittseitigen Ende einer Auspreßvorrichtung (11) verbundenen Gehäuse (4) einer Granuliervorrichtung ein Anfahrventil (13) angeordnet ist und das Anfahrventil (13) mit einem im Gehäuse (4) lageveränderbaren Küken (1) ausgestaltet ist, wobei das Küken (1) in Betriebsposition eine mit der Auspreßeinrichtung (11) verbundene Einlaßöffnung (18) und seitlich hierzu mindestens zwei damit verbundene Ausläße (5) aufweist, woran im Gehäuse jeweils totraumarme Verteilerräume (2) anschließen, die das Küken (1) mit zumindest zwei beheizbaren und räumlich voneinander getrennten Lochplatten (3) verbinden.

8. Vorrichtung nach Anspruch 7, dadurch gekennzeichnet, daß das Küken (1) zwei Auslässe (5 und 5') aufweist, woran jeweils totraumarme Verteilerräume (2 und 2') anschließen, die das Küken mit zwei räumlich getrennten und beheizbaren Lochplatten (3 und 3') verbinden.

9. Vorrichtung nach Anspruch 6, dadurch gekennzeichnet, daß die Vorrichtung mit zwei getrennten Zuführungen für das Kühlmedium verbunden ist.

10. Vorrichtung nach Anspruch 7, dadurch gekennzeichnet, daß die Lochplatten eine Lochzahl von 50 bis 500 und einem Lochdurchmesser von 1 bis 5 mm aufweisen.

## Claims

1. Process for pelletizing a polymer melt, characterized in that the polymer melt to be pelletized being divided in the housing of a pelletizing device into at least two part-streams, which are respectively deflected and fed to at least two die plates which are spatially separate from one another and are heatable, whereupon the two part-streams are transformed into pellet form by the cutting devices assigned to the die plates and are post-treated by means of a cooling medium.

2. Process according to Claim 1, characterized in that the division of the polymer melt takes place in a component of corresponding geometry fixedly installed in a pelletizing device.

3. Process according to Claim 1, characterized in that the division of the polymer melt takes place in a cock of a starting valve.

4. Process according to Claim 1, characterized in that the part-streams are deflected by in each case 45 to 120°.

5. Process according to Claim 1, characterized in that the polymer melt is divided into two part-streams, which are fed to two die plates which are spatially separate and heatable.

6. Process according to Claim 1, characterized in that polypropylene is used as the polymer.

7. Apparatus for pelletizing polymer melts, characterized in that a starting valve (13) being arranged in a housing (4) of a pelletizing device, which housing is connected to the outlet end of an extrusion device (11), and the starting valve (13) being designed with a cock (1) which can be changed in its position in the housing (4), the cock (1) having in the operating position an inlet opening (18), connected to the extrusion device (11), and laterally of said opening, at least two outlets (5) connected thereto, to which outlets there are respectively connected in the housing manifold spaces (2) which are virtually free from dead spots and connect the cock (1) to at least two die plates (3) which are heatable and spatially separate from one another.

8. Apparatus according to Claim 7, characterized in that the cock (1) has two outlets (5 and 5'), to which there are respectively connected manifold spaces (2 and 2') which are virtually free from dead spots and connect the cock to two die plates (3 and 3') which are spatially separate and heatable.

9. Apparatus according to Claim 6, characterized in that the apparatus is connected to two separate supplies for the cooling medium.

10. Apparatus according to Claim 7, characterized in that the die plates have a number of dies of from 50 to 500 and a die diameter of from 1 to 5 mm.

## Revendications

1. Procédé de granulation d'une masse fondue polymère, selon lequel on divise la masse fondue polymère devant être granulée dans le carter d'un dispositif de granulation et subdivisée en au moins deux écoulements partiels, qui sont déviés chacun et sont envoyés au moins à deux plaques perforées séparées spatialement l'une de l'autre et pouvant être chauffées, les deux écoulements partiels étant transformés sous la forme de granulés et étant traités ultérieurement à l'aide d'un fluide de refroidissement.

2. Procédé selon la revendication 1, caractérisé en ce que la division de la masse fondue polymère est effectuée dans un composant ayant une géométrie correspondante, inséré de façon fixe dans un dispositif de granulation.

3. Procédé selon la revendication 1, caractérisé en ce que la répartition de la masse fondue polymère s'effectue dans un boisseau d'une soupape de démarrage.

4. Procédé selon la revendication 1, caractérisé en ce que des écoulements partiels sont déviés chacun de 45 à 120°.

5. Procédé selon la revendication 1, caractérisé en ce que la masse fondue polymère est subdivisée en deux écoulements partiels, qui sont envoyés à deux plaques perforées séparées spatialement et pouvant être chauffées.

6. Procédé selon la revendication 1, caractérisé en ce qu'on utilise du polypropylène comme polymère.

7. Dispositif de granulation de masses fondues polymères, selon lequel une soupape de démarrage (11) est disposée dans un carter (4) d'un dispositif de granulation, qui est relié à l'extrémité côté sortie dans le dispositif de sortie (11) et que la soupape de démarrage (13) est pourvue d'un boisseau (1), dont la position est variable dans le carter (4), le boisseau (1) possédant, dans une position de service, une ouverture d'admission (18) reliée au dispositif de sortie (11), et comportant à cet effet, latéralement, au moins deux sorties (5) reliées à cette ouverture et auxquelles se raccordent, dans le carter, des chambres respectives de distribution (2), qui possèdent un faible espace mort et relient le boisseau (1) à au moins deux plaques perforées (3) pouvant être chauffées et qui sont séparées spatialement l'une de l'autre.

8. Dispositif selon la revendication 7, caractérisé en ce que le boisseau (1) comporte deux sorties (5 et 5'), auxquelles se raccordent des chambres respectives de distribution (2 et 2'), qui présentent un faible espacement et qui relient le boisseau à deux plaques perforées (3 et 3') séparées spatialement et pouvant être chauffées.

9. Dispositif selon la revendication 6, caractérisé en ce que le dispositif est relié à deux systèmes séparés d'amenée pour le fluide de refroidissement.

10. Dispositif selon la revendication 7, caractérisé en ce que les plaques perforées possèdent 50 à 500 trous, ayant un diamètre de 1 à 5 mm.
